# EUROPÄISCHE PATENTSCHRIFT

(11) **EP 3 058 701 B1**
(45) Veröffentlichungstag und Bekanntmachung des Hinweises auf die Patenterteilung: **14.08.2019**
(21) Anmeldenummer: 14824802.4
(22) Anmeldetag: 17.12.2014
(51) Int. Cl.: H04L 29/06, H04L 9/32

(54) **VERFAHREN, VERWALTUNGSVORRICHTUNG UND GERÄT ZUR ZERTIFIKAT-BASIERTEN AUTHENTIFIZIERUNG VON KOMMUNIKATIONSPARTNERN IN EINEM GERÄT**
METHOD, MANAGEMENT APPARATUS AND DEVICE FOR CERTIFICATE-BASED AUTHENTICATION OF COMMUNICATION PARTNERS IN A DEVICE
PROCÉDÉ, DISPOSITIF DE GESTION ET APPAREIL POUR L'AUTHENTIFICATION PAR CERTIFICAT DE PARTENAIRES DE COMMUNICATION DANS UN APPAREIL

(30) Priorität: 23.01.2014 DE 102014201234
(43) Veröffentlichungstag der Anmeldung: 24.08.2016
(73) Patentinhaber: Siemens Aktiengesellschaft, 80333 München (DE)
(72) Erfinder: FALK, Rainer, 85586 Poing (DE); FRIES, Steffen, 85598 Baldham (DE); BLÖCHER, Uwe, 82178 Puchheim (DE)
(86) Internationale Anmeldenummer: PCT/EP2014/078167
(87) Internationale Veröffentlichungsnummer: WO 2015/110233

(56) Entgegenhaltungen:
- US-A1- 2008 301 779
- COOPER NIST S SANTESSON MICROSOFT S FARRELL TRINITY COLLEGE DUBLIN S BOEYEN ENTRUST R HOUSLEY VIGIL SECURITY W POLK NIST D: "Internet X.509 Public Key Infrastructure Certificate and Certificate Revocation List (CRL) Profile; rfc5280.txt", 20080501, 1. Mai 2008 (2008-05-01), XP015057243, ISSN: 0000-0003

## Beschreibung

Verfahren, Verwaltungsvorrichtung und Gerät zur Zertifikat-basierten Authentifizierung von Kommunikationspartnern in einem Gerät

Die Erfindung bezieht sich auf ein Verfahren, eine Verwaltungsvorrichtung und ein Gerät für eine Zertifikat-basierte Authentifizierung von Kommunikationspartnern in einem Gerät in einer Kommunikationsumgebung.

In industriellen Automatisierungssystemen wird zunehmend mittels offener Protokolle, wie dem Internetprotokoll (IP), dem Transfersteuerungsprotokoll (TCP), dem Nutzerdatagrammprotokoll (UDP), dem Hypertextübertragungsprotokoll (HTTP) oder auch einem, entsprechend der genutzten Geräte, beschränkten Anwendungsprotokoll (CoAP) kommuniziert. Auch werden das vereinheitlichtes-Architektur-Protokoll (OPC UA) oder das Nachrichtenschlange-Telemetrie-Transport-Protokoll MQTT zur Kommunikation verwendet. Zur Gewährleistung einer Übertragungssicherheit sowie der Authentizität der Kommunikationspartner werden meist kryptographische Verfahren verwendet. Für die Verfahren werden häufig asymmetrische Verfahren verwendet, bei denen für einen Sender und einen Empfänger jeweils unterschiedliche Schlüssel verwendet werden.

Zur Authentisierung eines Kommunikationspartners in einem Gerät wird üblicherweise ein Zertifikat des Kommunikationspartners überprüft und als gültig erkannt, wenn die Einträge des Zertifikats als gültig geprüft werden und wenn es von einer vertrauenswürdigen Zertifizierungsstelle ausgestellt wurde. Typischerweise erfolgt eine Einschränkung akzeptierter Zertifikate basierend auf einer Zertifikats-Widerrufsliste, auch Certificate Revocation List CRL genannt, in der während der Laufzeit ungültig gewordene, das heißt widerrufene, Zertifikate eingetragen sind. Dies ermöglicht eine offene Kommunikation mit vielen Kommunikationspartnern, da ein Kommunikationspartner anhand seines Zertifikats authentifiziert werden kann.

Ob ein Kommunikationspartner zur Kommunikation mit dem Gerät berechtigt ist, wird anhand von Zugriffskontrollinformationen oder einer Abfrage in einem Zugriffskontroll-Server geprüft. Dies hat insbesondere in einem Kommunikationsnetz, wie beispielsweise einem Automatisierungsnetz, in dem erlaubte Kommunikationsbeziehungen von vornherein durch beispielsweise Projektierungsdaten bekannt sind, einen hohen Datenstrom in Form von Kontrollnachrichten über das Kommunikationsnetzwerk zur Folge.

Die Druckschrift US 2008/0301779 A1 offenbart ein Verfahren, bei dem ein geschütztes Gerät bei einer Kommunikationsanfrage durch ein zweites Gerät eine Sicherheitsinformation, beispielsweise ein Zertifikat, des anfragenden zweiten Gerätes anhand einer Liste vertrauenswürdiger Geräte prüft und lediglich dann die Kommunikation zulässt, wenn die Sicherheitsinformation des zweiten Gerätes mit einer Sicherheitsinformation in der Liste der vertrauenswürdigen Geräte übereinstimmt.

Es ist somit die Aufgabe der vorliegenden Erfindung, eine einfache Konfigurationsmöglichkeit von Geräten abhängig von ihrem Einsatzgebiet oder Gerätetyp oder sonstigen Zielrahmen zu ermöglichen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren für eine Zertifikats-basierte Authentifizierung von Kommunikationspartnern in einem Gerät weist als ersten Verfahrensschritt das Identifizieren eines Zielrahmens für das Gerät durch eine Eingabe an einer Listen-Verwaltungsvorrichtung auf. Es folgt das Ermitteln aller erlaubten Kommunikationspartner für den identifizierten Zielrahmen aus einer Gesamtheit an möglichen Kommunikationspartnern und das Erzeugen einer für den Zielrahmen spezifischen Positivliste, die jeweils ein Zertifikat für jeden ermittelten erlaubten Kommunikationspartner umfasst in der Listen-Verwaltungsvorrichtung. Im nächsten Verfahrensschritt wird die Positivliste auf dem Gerät abgespeichert. Ein von einem vermeintlichen Kommunikationspartner im Gerät empfangenes Zertifikat wird gegenüber den Zertifikaten in der Positivliste überprüft, wobei eine Kommunikation zwischen Gerät und dem vermeintlichen Kommunikationspartner nur dann erlaubt wird, wenn das Zertifikat des vermeintlichen Kommunikationspartners mit einem Zertifikat in der Positivliste übereinstimmt, wobei in einem Gerät (40) für unterschiedliche Zielrahmen unterschiedliche Positivlisten gespeichert werden.

Somit kann jedes Gerät in der Kommunikationsumgebung einen erlaubten Kommunikationspartner eigenständig, und ohne eine Abfrage in einem externen Zugriffskontroll-Server durchzuführen, authentifizieren. Dies reduziert somit die Anzahl und Bandbreite von Steuerungsnachrichten im Kommunikationsnetz. Zusätzlich kann von vornherein durch die Verwendung einer Positivliste lediglich eine Kommunikation mit erlaubten Kommunikationspartnern vorgegeben und eingerichtet werden. Dies reduziert die Angriffsmöglichkeiten durch nicht erlaubte und insbesondere feindliche Angreifer. Des Weiteren können für das Gerät abhängig vom Zielrahmen, wie beispielsweise dem Verwendungszweck des Gerätes oder dem Einsatzgebiet des Gerätes, Kommunikationsverbindungen zu unterschiedlichen Kommunikationspartnern zugelassen werden.

In einer vorteilhaften Ausführungsform wird der Zielrahmen des Gerätes durch eine Angabe eines Gerätetyps und/oder eines Verwendungszwecks des Gerätes und/oder eines erlaubten geografischen Einsatzgebietes des Gerätes gekennzeichnet.

Dadurch können gezielt Positivlisten für unterschiedliche Geräte, die aber den gleichen Zielrahmen aufweisen, erzeugt werden und in all diesen Geräten mit dem entsprechenden Zielrahmen verwendet werden. Es muss somit nicht für jedes einzelne Gerät notwendigerweise eine eigene Positivliste erzeugt werden. Über die Angabe eines Gerätetyps oder eines geografischen Einsatzgebiets können somit dezidierte oder auch mehrere Positivlisten für ein Gerät ausgewählt werden. Ein einzelnes Gerät kann dabei eine einzelne Positivliste unterstützen, die für alle Kommunikationsbeziehungen des Gerätes einheitlich verwendet wird. Ein einzelnes Gerät kann auch mehrere Positivlisten unterstützen, die jeweils für eine bestimmte Teilmenge der Kommunikationsbeziehungen verwendet werden. So kann beispielsweise eine erste Positivliste für die Übertragung von Steuerdaten und Messdaten verwendet werden, und eine zweite Positivliste kann für eine Diagnosekommunikation verwendet werden.

Die Positivliste der Zertifikate kann auf mehrere Weisen abgeleitet werden. Sie kann beispielsweise dienstespezifisch oder gerätespezifisch oder aus einer Kombination aus Diensten, Geräten und weiteren Informationen abgeleitet werden. Jedoch können im Allgemeinen beliebige Kriterien zur Eingrenzung des Zielrahmens einer Positivliste verwendet werden.

In einer vorteilhaften Ausführungsform werden weitere Bedingungen zur Gültigkeit eines Zertifikats in die Positivliste eingetragen.

Dies ermöglicht es beispielsweise, die Gültigkeit eines Zertifikats an den Betriebsmodus des Gerätes oder an eine Tageszeit beziehungsweise einen Zeitbereich zu koppeln.

In einer vorteilhaften Ausführungsform werden als weitere Bedingung das Vorhandensein eines gültigen Attributzertifikats und/oder das Vorhandensein vorbestimmter Parameter eines Attributzertifikats zu einem Zertifikat in die Positivliste eingetragen.

Dies hat den Vorteil, dass vielfältige Nebenbedingungen, die durch vielfältige Einträge bzw. Parameter in einem Attributzertifikat gegeben sind, für die Gültigkeitsprüfung zugänglich sind. Auch können durch eine unterschiedliche Gültigkeitsdauer von Attributzertifikat und dem Zertifikat selbst lediglich zeitlich beschränkt Nebenbedingungen gesetzt werden.

In einer vorteilhaften Ausführungsform werden bei oder nach einer Aktualisierung der Positivliste des Gerätes alle Kommunikationsverbindungen, die von dem Gerät zu einem Kommunikationspartner mit einem nicht mehr erlaubten Zertifikat aufgebaut sind, beendet und neu aufgebaut oder neue Sitzungsverhandlungsprozeduren initiiert.

Dies garantiert, dass nach einer Aktualisierung der Positivliste Kommunikationsbeziehungen, die nun nicht mehr erlaubt sind, auch tatsächlich beendet werden, insbesondere wenn vor der Aktualisierung eine solche Kommunikationsverbindung aktiv vorhanden war. Somit werden auch bestehende Kommunikationsverbindungen bei einer Aktualisierung der Positivliste überprüft.

In einem weiteren vorteilhaften Ausführungsbeispiel sind die Zertifikate der Kommunikationspartner in einer Positivliste in Abhängigkeit von der Häufigkeit ihrer Nutzung angeordnet.

Dies beschleunigt die Dauer des Verbindungsaufbaus und führt somit einem optimierten Verbindungsaufbau zu den am häufigsten kontaktierten Kommunikationspartnern.

In einem Ausführungsbeispiel wird die Anordnung der Zertifikate in der Positivliste dynamisch während der Gültigkeitsdauer der Positivliste angepasst.

Dies ermöglicht es, bei einer Änderung der Häufigkeit von Kommunikationsbeziehungen die Einträge in der Positivliste umzuorganisieren und somit einen schnellen Kommunikationsaufbau zu den geänderten häufigsten genutzten Kommunikationspartnern wieder zu ermöglichen.

In einer vorteilhaften Ausführungsform wird der Zielrahmen als Parameter in einer Positivliste durch eine Textzeichenkette und/oder durch eine IP-Adresse und/oder durch einen Servernamen und/oder durch eine Objektkennung angegeben.

Durch die Bezeichnung einer Positivliste durch eine Textzeichenkette kann der Zielrahmen der Positivliste einfach unterschieden werden. Durch eine Kennzeichnung des Zielrahmens der Positivliste durch eine IP-Adresse oder einen Servernamen kann die Positivliste beispielsweise dem Erstellungsort oder der Verteilungsstelle der Positivliste zugeordnet werden.

Die erfindungsgemäße Listen-Verwaltungsvorrichtung zur Bereitstellung einer Positivliste für ein Gerät in einer Kommunikationsumgebung umfasst eine Eingabeeinheit, die derart ausgebildet ist, einen Zielrahmen für das Gerät durch eine Eingabe zu identifizieren, eine Konfigurationseinheit, die derart ausgebildet ist, alle erlaubten Kommunikationspartner aus einer Gesamtheit an möglichen Kommunikationspartnern für den identifizierten Zielrahmen zur ermitteln und daraus eine Positivliste, die jeweils ein Zertifikat für jeden ermittelten erlaubten Kommunikationspartner umfasst, zu erzeugen und eine Ausgabe-Einheit, die die zielrahmenspezifische Positivliste an das Gerät übermittelt.

Eine solche Listen-Verwaltungsvorrichtung hat den Vorteil, dass für ein Gerät beziehungsweise einen Zielrahmen eines Gerätes die Zertifikate aller erlaubten Kommunikationspartner vor einer ersten Kommunikation erstellt und an das Gerät übermittelt werden. Nachfolgend kann das Gerät bei einer weiteren Kommunikationsanfrage eigenständig überprüfen, ob es sich um einen erlaubten Kommunikationspartner handelt. Eine permanente Verbindung zwischen Gerät und beispielsweise einem Zugriffssteuerungsserver oder auch der Listen-Verwaltungsvorrichtung ist nicht notwendig.

In einer vorteilhaften Ausführungsform ist die Konfigurationseinheit derart ausgebildet, eine Aktualisierung der Positivliste durchzuführen. Dies ermöglicht es, die erlaubten Kommunikationspartner bei Bedarf, beispielsweise bei einer Umkonfiguration des Gerätes, zentral zu ändern und in das Gerät einzuspielen. Bei einer Umkonfiguration des gesamten Kommunikationsnetzes kann durch die Listen-Verwaltungsvorrichtung eine effiziente, strukturierte, Verteilung der Positivlisten, beispielsweise entsprechend dem neuen Zielrahmen einer Gerätegruppe, durchgeführt werden.

In einer vorteilhaften Ausführungsform übermittelt die Ausgabeeinheit die Positivliste signiert und über eine lokale oder gesicherte Verbindung an das Gerät. Vorzugsweise verfügt das Gerät dabei über einen Positivlisten-Schlüssel, mit dem eine kryptographische Prüfinformation einer bereitgestellten Positivliste für Verwendung durch das Gerät geprüft wird. Dieser Positivlisten-Schlüssel kann dabei vorgegeben sein, oder er kann durch eine übergeordnete Positivliste mit Einträgen von untergeordneten Positivlisten bereitgestellt werden.

Dies reduziert eine Manipulationsmöglichkeit der Positivliste während der Übertragung an das Gerät.

In einer vorteilhaften Ausführungsform umfasst die Konfigurationseinheit einen Filter, der die Zertifikate in einer Reihenfolge entsprechend der Häufigkeit ihrer Nutzung in der Positivliste anordnet.

Dies erlaubt es, die Einträge in der Positivliste bereits bei deren Erstellung entsprechend der Häufigkeit ihrer Nutzung, die beispielsweise durch Statistikauswertungen der vorherigen Nutzung ermittelt wurden, zu ordnen.

Das erfindungsgemäße Gerät zur Zertifikat-basierten Authentifizierung von Kommunikationspartnern in einer Kommunikationsumgebung umfasst eine Speichereinheit, die derart ausgebildet ist eine Positivliste mit erlaubten Zertifikaten abzuspeichern, eine Authentisierungseinheit, die derart ausgebildet ist, ein Zertifikat eines vermeintlichen Kommunikationspartners gegenüber den erlaubten Zertifikaten in der Positivliste zu überprüfen, wobei eine Kommunikation nur dann erlaubt wird, wenn das Zertifikat des vermeintlichen Kommunikationspartners mit einem Zertifikat in der Positivliste übereinstimmt.

Dies hat den Vorteil, dass das Gerät auch ohne eine permanente Verbindung zu einem Zugriffssteuerungsserver und auch ohne permanente Verbindung zu einer Listen-Verwaltungsvorrichtung erlaubte Kommunikationspartner identifizieren kann.

In einer vorteilhaften Ausführungsform umfasst ein Gerät eine oder mehrere zielrahmenspezifische Positivlisten

Dies hat den Vorteil, dass ein Gerät für unterschiedliche Verwendungszwecke arbeiten kann und dabei unterschiedliche erlaubte Kommunikationspartner ausgewählt werden können. Dies erhöht die Flexibilität des Gerätes bei gleichbleibend hoher Sicherheit gegenüber einem Eindringen nicht erlaubter Kommunikationspartner.

In einer vorteilhaften Ausführungsform umfasst die Speichereinheit einen Filter, der die erlaubten Zertifikate in einer Reihenfolge entsprechend der Häufigkeit ihrer Nutzung in der zielrahmenspezifischen Positivliste anordnet.

Dies ermöglicht eine dynamische Anpassung der Reihenfolge der Positivliste im Gerät selbst und abhängig von der aktuellen Häufigkeit von Kommunikationsverbindungen.

Das erfindungsgemäße Computerprogrammprodukt umfasst Programmbefehle zur Durchführung des Verfahrens gemäß den vorgenannten Verfahrensansprüchen.

Der erfindungsgemäße Datenträger speichert das Computerprogrammprodukt nach Anspruch 16 und kann zur Installation des Verfahrens in einer Listen-Verwaltungsvorrichtung und einem Gerät verwendet werden.

Ausführungsbeispiele des erfindungsgemäßen Verfahrens, der Listen-Verwaltungsvorrichtung sowie des Gerätes sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens in Form eines Flussdiagramms;
- Fig. 2: eine beispielhafte Kommunikationsumgebung mit einer erfindungsgemäßen Ausführungsform einer ListenVerwaltungsvorrichtung in schematischer Darstellung;
- Fig. 3: ein Ausführungsbeispiel einer erfindungsgemäßen Listen-Verwaltungsvorrichtung in schematischer Darstellung; und
- Fig. 4: ein Ausführungsbeispiel eines erfindungsgemäßen Gerätes in schematischer Darstellung.

Einander entsprechende Teile sind in allen Figuren mit den gleichen Bezugszeichen versehen.

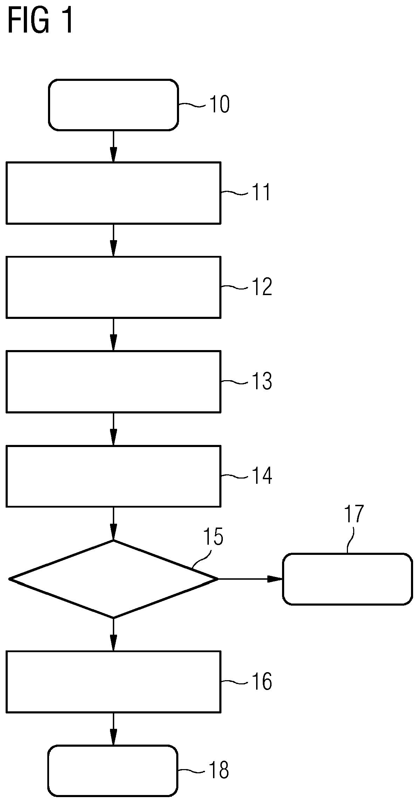

Anhand von Figur 1 wird nun das erfindungsgemäße Verfahren für eine Zertifikats-basierte Authentifizierung in einer Kommunikationsumgebung erläutert. Die Grundidee besteht darin, eine oder mehrere spezifische Positivlisten für ein Gerät abhängig von einem Zielrahmen, wie beispielsweise einen Gerätetyp oder einer Geräteklasse oder auch für einen Verwendungszweck eines Gerätes oder den geografischen Einsatzort eines Gerätes zu erzeugen. Die Positivlisten enthalten dabei lediglich die Zertifikate oder beispielsweise Hash-Werte von Zertifikaten von Kommunikationspartnern mit denen eine Kommunikation erlaubt ist.

Das Verfahren beginnt im Zustand 10, in dem ein Gerät eine erste Kommunikationsanfrage von einem Kommunikationspartner im Kommunikationsnetz empfängt. Nachfolgend, im Verfahrensschritt 11, wird ein Zielrahmen für das Gerät identifiziert. Der Zielrahmen kann dabei beispielsweise eine Angabe eines Gerätetyps, aber auch eines Einzelgerätes oder einer Gruppe an Geräten sein. Der Zielrahmen kann aber auch ein Verwendungszweck des Gerätes sein, wie beispielsweise die Nutzung eines Gerätes für einen Service-Zugang, die Verwendung des Gerätes zur Steuerungsdatenübertragung oder die Verwendung des Gerätes zur die Übertragung von Diagnosedaten.

Im darauffolgenden Verfahrensschritt 12 werden für diesen identifizierten Zielrahmen alle erlaubten Kommunikationspartner aus einer Gesamtheit an möglichen Kommunikationspartnern ermittelt. Dies findet in einer Listen-Verwaltungsvorrichtung statt, die beispielsweise eine zumindest temporäre Verbindung zu einem Projektierungs-Server oder einem Zugriffskontroll-Server hat oder in diese integriert sind.

Im Verfahrensschritt 13 wird daraus eine für den Zielrahmen spezifische Positivliste erzeugt, die jeweils ein spezifisches Zertifikat für jeden ermittelten erlaubten Kommunikationspartner umfasst. Das erlaubte Zertifikat kann beispielsweise durch eine Seriennummer des Zertifikats aber auch beispielsweise durch eine Kenngröße, wie beispielsweise einen Hash-Wert des Zertifikats und/oder den Hash-Wert eines öffentlichen Schlüssels, gekennzeichnet und eingetragen werden.

Die Auswahl der erlaubten Kommunikationspartner kann dabei ebenfalls in Abhängigkeit von vorgegebenen Parametern im Zertifikat des Kommunikationspartners durchgeführt werden. Insbesondere können die vorgegebenen Parameter auch in einem Attribut-Zertifikat zum Zertifikat des Kommunikationspartners enthalten sein und für die Auswahl der erlaubten Kommunikationspartner herangezogen werden.

Es können Nebenbedingungen zur Gültigkeit eines Zertifikats in die Positivliste eingetragen werden. Eine solche Bedingung kann beispielsweise ein Betriebsmodus des Gerätes oder eine Tageszeit sein. Als Bedingung können aber auch das Vorhandensein und/oder die Gültigkeit eines Attribut-Zertifikats sein. Das Zertifikat eines in der Positivliste enthaltenen Zertifikateintrags soll nur dann als gültig akzeptiert werden, wenn zusätzlich ein Attribut-Zertifikat vorliegt, das die in der Positivliste genannten spezifizierten Kriterien erfüllt, beispielsweise spezifizierte Parameter aufweist.

Nach dem Erzeugen der Positivliste wird diese im Verfahrensschritt 14 auf dem Gerät abgespeichert.

Die Erzeugung einer oder einer Vielzahl von Zielrahmenspezifischen Positivliste einschließlich des Identifizierens des Zielrahmens und der Ermittlung der erlaubten Kommunikationspartner, siehe Verfahrensschritte 11, 12 und 13 können auch bei der Installation und Inbetriebnahme einer Kommunikationsumgebung, beispielsweise der Installation einer Automatisierungsanlage mit über ein Kommunikationsnetz verbundenen Automatisierungsgeräten, oder auch vor der ersten Inbetriebnahme eines neuen Gerätes in einer Kommunikationsumgebung ausgeführt werden. Die Positivliste kann dann beispielsweise bei einer ersten Kommunikationsanfrage eines Kommunikationspartners aus der Kommunikationsumgebung auf das Gerät übertragen und abgespeichert, siehe Verfahrensschritt 14, werden. Die Positivliste kann aber auch vor dem Einbringen des Geräts in die Kommunikationsumgebung auf das Gerät aufgespielt werden.

Empfängt das Gerät nachfolgend eine Anfrage eines Kommunikationspartners zum Aufbau einer Kommunikationsbeziehung, so wird im Verfahrensschritt 15 das von einem vermeintlichen Kommunikationspartner im Gerät empfangene Zertifikat gegenüber den Zertifikaten in der gespeicherten Positivliste überprüft. Stimmt das Zertifikat des vermeintlichen Kommunikationspartners mit einem Zertifikat in der Positivliste überein und erfüllt das Zertifikat die in der Positivliste genannten Nebenbedingungen, wird eine Kommunikation erlaubt, siehe Verfahrensschritt 16, und eine Kommunikationsverbindung aufgebaut, siehe Verfahrensschritt 18.

Stimmt das vom vermeintlichen Kommunikationspartner übermittelte Zertifikat nicht mit den Zertifikaten in der Positivliste überein beziehungsweise erfüllt das Zertifikat nicht die in der Positivliste genannten Nebenbedingungen, so wird die Kommunikationsanforderung abgelehnt, siehe Verfahrensschritt 17.

Ein Gerät kann für unterschiedliche Zielrahmen wie beispielsweise unterschiedliche Verwendungszwecke unterschiedliche Positivlisten speichern. Ein Gerät akzeptiert jedoch lediglich solche Positivlisten, die einen zum Gerät passenden Zielrahmen aufweisen.

Somit kann das Gerät eigenständig die Zulässigkeit einer Kommunikation mit einem vermeintlichen Kommunikationspartner überprüfen, ohne bei jeder Kommunikationsanfrage die Gültigkeit durch eine Anfrage bei beispielsweise einem Zugriffskontroll-Server durchzuführen. Außerdem sind die möglichen Kommunikationspartner auf die in der Positivliste genannten Zertifikatbesitzer beschränkt. Somit ist eine einfache und damit schnelle und Fehler-robuste Zertifikatsvalidierung auf dem Gerät möglich.

Eine Positivliste selbst ist beispielsweise entsprechend einer Spezifikation RFC 5280, die auch für eine Zertifikats-Widerrufsliste verwendet wird, strukturiert. Sie umfasst als Parameter den Zielrahmen, der als Textzeichenkette oder aber auch alternativ oder zusätzlich durch eine IP-Adresse, durch einen Servernamen oder durch eine Objektkennung angegeben wird. Eine Kombination der unterschiedlichen Parameter ist ebenfalls möglich. Die Positivliste kann ebenfalls eine Angabe über den Aussteller der Positivliste enthalten, sowie eine Angabe zur Gültigkeitsdauer der Positivliste umfassen. Nach Ablauf der Gültigkeitsdauer oder bei Überschreitung des Gültigkeitsdatums oder auch durch eine Änderung in der Kommunikationsumgebung kann die Positivliste aktualisiert werden. Dazu wird vorteilhafterweise in einer Listen-Verwaltungsvorrichtung, die beispielsweise in einem zentralen Managementknoten oder auch in einer entsprechenden Vorrichtung oder auf dem Gerät selbst ausgebildet ist, die Positivliste überprüft und aktualisiert werden.

Nach der Aktualisierung der Positivliste wird diese dem Gerät wieder übermittelt beziehungsweise bereitgestellt. Nach dem Erhalt einer aktualisierten Positivliste werden im Gerät alle bestehenden Verbindungen, insbesondere sichere Verbindungen, die mittels einer Transportschichtprotokolls, wie z.B. SSL, TLS oder auch IPsec, aufgebaut und betrieben werden, beendet und anschließend neu aufgebaut. Alternativ kann eine erneute Sitzungsverhandlungsprozedur initiiert werden. In beiden Fällen wird für jede Verbindung das Zertifikat des Kommunikationspartners überprüft. Somit wird sichergestellt, dass nur mit den Kommunikationspartnern, die in der aktualisierten Positivliste enthalten sind, eine Kommunikationsverbindung aufgebaut ist.

Es können aber auch die Einträge der aktualisierten Positivliste gegen die Einträge der alten Positivliste geprüft werden. Lediglich für geänderte beziehungsweise gelöschte Einträge werden bestehende Kommunikationsverbindungen überprüft und terminiert, beziehungsweise terminiert und ein Wiederaufbau beziehungsweise eine Sitzungsverhandlungsprozedur initiiert.

Die Einträge der Positivliste können in Abhängigkeit von der Häufigkeit ihrer Nutzung, beispielsweise entsprechend den Echtzeitanforderungen einer Verbindung oder aber anderer Kriterien, beispielsweise vorrangiger Dienste des Kommunikationspartners, angeordnet werden. Die Anordnung der Zertifikate der Kommunikationspartner kann bereits bei der Erstellung der Positivliste durchgeführt werden. Die Anordnung der Zertifikate kann aber auch dynamisch während der Gültigkeitsdauer einer Positivliste und in dem Gerät selbst, in dem sie gespeichert und in dem sie angewendet wird, angepasst werden.

Da es bei der Anwendung solcher probabilistischen Datenstrukturen zu Fehlbewertungen einzelner Zertifikate kommen kann, kann zusätzlich geprüft werden, dass kein anderes Gerät der ausstellenden Zertifizierungsstelle unzulässigerweise als gültig durch den Bloom-Filter angezeigt wird. Durch eine solche gezielte Anordnung der Einträge in der Positivliste kann die Dauer des Verbindungsaufbaus verkürzt werden und eine insbesondere eine schnelle Kommunikation für wichtige Anwendungen sichergestellt werden.

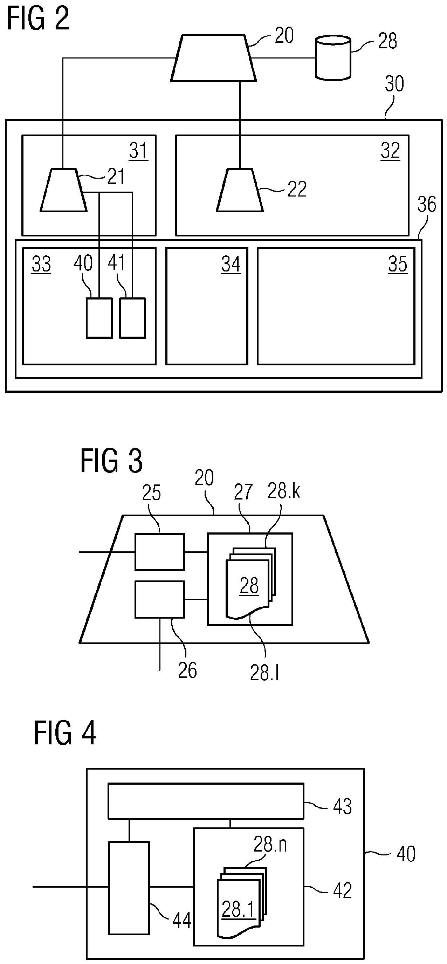

Figur 2 zeigt eine Kommunikationsumgebung 30 mit einer Vielzahl von Geräten 40, 41, die jeweils in Gruppen mit jeweils unterschiedlichem Zielrahmen 31 bis 36, beispielsweise der Übertragung von Sensordaten an einen übergeordneten Knoten in der Kommunikationsumgebung, angeordnet sind. Die Strukturierung bzw. die Zuordnung der Geräte in Gruppen 31 bis 36 könnte auch einer funktionalen Gliederung einer Automatisierungs- oder Energiesteuerungsanlage entsprechen.

Die Positivlisten für die Geräte 40, 41 werden beispielsweise in einer übergeordneten Listen-Verwaltungsvorrichtung 20 jeweils für verschiedene Zielrahmen erzeugt. Diese Positivlisten werden an untergeordnete Listen-Verwaltungsvorrichtungen 21, 22 übermittelt, die beispielsweise überprüfen, ob der Aussteller der Positivliste eine vertrauenswürdige Instanz war. Dies kann durch die Signatur einer Positivliste beziehungsweise anhand der Vertrauenswürdigkeit des Ausstellers der Signatur überprüft werden. Daraufhin erzeugt eine untergeordnete Listen-Verwaltungsvorrichtung 21, 22 gerätespezifische Positivlisten, die sie wiederum signiert. Somit kann beispielsweise die Vertrauenswürdigkeit beziehungsweise Echtheit der dem Gerät übermittelten Positivliste sichergestellt werden.

Figur 3 beschreibt näher den Aufbau einer Listen-Verwaltungsvorrichtung 20. Sie umfasst eine Eingabeeinheit 25, die mit einer Konfigurationseinheit 27 verbunden ist. Diese ist wiederum mit einer Ausgabeeinheit 26 verbunden. Die Eingabeeinheit 25 ist derart ausgebildet, einen Zielrahmen für das Gerät 40, 41 durch eine Eingabe zu identifizieren. Diese Eingabe kann beispielsweise durch den in Figur 2 dargestellten Projektierungs-Server oder einen anderen Zugriffskontroll-Server eingegeben werden oder aber auch durch das Gerät selbst geliefert werden. Die Konfigurationseinheit 27 ist derart ausgebildet, alle erlaubten Kommunikationspartner aus einer Gesamtheit an möglichen Kommunikationspartnern für den identifizierten Zielrahmen zu ermitteln und daraus eine Positivliste 28, die jeweils ein Zertifikat für jeden ermittelten erlaubten Kommunikationspartner umfasst, zu erzeugen. Die Listen-Verwaltungsvorrichtung 20 kann dabei eine große Anzahl verschiedener Positivlisten 28.k, ..., 28.l für jeweils verschiedene Zielrahmen umfassen.

Diese Positivlisten 28.k, ..., 28.l werden bei Bedarf oder nach Aktualisierung über die Ausgabeeinheit 26 an ein Gerät 40, 41 oder aber eine untergeordnete Listen-Verwaltungsvorrichtung 21, 22 übergeben. Die Ausgabeeinheit 26 ist derart ausgebildet, dass sie die Positivlisten signiert 28.k,..., 28.l und über eine lokale und/oder gesicherte Verbindung an das Gerät 40, 41 übermittelt. Die Konfigurationseinheit 27 umfasst einen Filter, beispielsweise einen Bloom-Filter, der die erlaubten Zertifikate entsprechend der Häufigkeit ihrer Nutzung in der Positivliste 28.k,..., 28.l anordnet. Andere Kriterien für die Anordnung der erlaubten Zertifikate, wie beispielsweise die Wichtigkeit unterschiedlicher Kommunikationspartner für die Funktion der Kommunikationsumgebung, sind zusätzlich möglich.

Figur 4 zeigt ein Gerät 40. Es umfasst eine Speichereinheit 42, eine Authentisierungseinheit 43 sowie eine Eingabe- und eine Ausgabe-Einheit, die hier als kombinierte Ein-/Ausgabeeinheit 44 dargestellt ist. Die Speichereinheit 42, die Authentisierungseinheit 43 sowie die Ein-/Ausgabeeinheit 44 sind miteinander jeweils verbunden.

Die Speichereinheit 42 ist dabei derart ausgebildet, eine beziehungsweise mehrere Positivlisten 28.1, ... 28.n, die für unterschiedliche Anwendungsbereiche dem Gerät 40 zugewiesen wurden, abzuspeichern. Die Authentisierungseinheit 43 ist derart ausgebildet, ein Zertifikat eines vermeintlichen Kommunikationspartners gegenüber den erlaubten Zertifikaten in der Positivliste 28 und den dort eventuell angegebenen Bedingungen zu überprüfen. Eine Kommunikation wird nur dann erlaubt und anschließend aufgebaut, wenn das Zertifikat des vermeintlichen Kommunikationspartners mit einem Zertifikat in der Positivliste 28, beispielsweise 28.n für einen bestimmten Zielrahmen, übereinstimmt. Die Speichereinheit 42 umfasst dabei einen Filter, der die erlaubten Zertifikate dynamisch anordnet, beispielsweise in einer Reihenfolge entsprechend der Häufigkeit ihrer Nutzung. Dies ermöglicht es, bei einer Änderung der Häufigkeit der Kommunikationsverbindung, die Liste darauf anzupassen und auch bei dem geänderten Kommunikationsverhalten eine optimierte Verbindungsaufbaudauer zu ermöglichen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren für eine Zertifikat-basierte Authentifizierung von Kommunikationspartnern in einem Gerät (40), mit den Verfahrensschritten:
- Identifizieren (11) eines Zielrahmens für das Gerät durch eine Eingabe an einer Listen-Verwaltungsvorrichtung (20),
- Ermitteln (12) aller erlaubten Kommunikationspartner für den identifizierten Zielrahmen (33) aus einer Gesamtheit an möglichen Kommunikationspartnern in der Listen-Verwaltungsvorrichtung (20),
- Erzeugen (13) einer für den Zielrahmen (33) spezifischen Positivliste (28), die jeweils ein Zertifikat für jeden ermittelten erlaubten Kommunikationspartner umfasst in der Listen-Verwaltungsvorrichtung (20),
- Abspeichern der Positivliste (28) auf dem Gerät (40),
- Überprüfen eines von einem vermeintlichen Kommunikationspartner im Gerät (40) empfangenen Zertifikates gegenüber den Zertifikaten in der Positivliste (28), wobei eine Kommunikation zwischen dem Gerät (40) und dem vermeintlichen Kommunikationspartner nur dann erlaubt wird, wenn das Zertifikat des vermeintlichen Kommunikationspartners mit einem Zertifikat in der Positivliste (28) übereinstimmt, **dadurch gekennzeichnet, dass** in dem Gerät (40) für unterschiedliche Zielrahmen unterschiedliche Positivlisten gespeichert werden, die jeweils für eine bestimmte Teilmenge der möglichen Kommunikationspartner verwendet werden.

2. Verfahren nach Anspruch 1, wobei der Zielrahmen des Geräts (40), durch eine Angabe eines Gerätetyps und/oder eines Verwendungszwecks des Geräts (40) und/oder eines erlaubten geographischen Einsatzgebietes des Geräts (40) gekennzeichnet wird.

3. Verfahren nach Anspruch 1, wobei Nebenbedingungen zur Gültigkeit eines Zertifikats in die Positivliste eingetragen werden.

4. Verfahren nach Anspruch 3, wobei als Nebenbedingung das Vorhandensein eines gültigen Attributzertifikats und/oder das Vorhandensein vorbestimmter Parameter eines Attributzertifikats zum Zertifikat in die Positivliste eingetragen werden.

5. Verfahren nach einem der Ansprüche 1 oder 4, wobei bei oder nach einer Aktualisierung der Positivliste (28) des Geräts (40) alle Kommunikationsverbindungen, die von dem Gerät (40) zu einem Kommunikationspartner mit einem nicht mehr erlaubten Zertifikat aufgebaut sind, beendet werden und neu aufgebaut oder Sitzungsverhandlungsprozeduren initiiert werden.

6. Verfahren nach einem der Ansprüche 1 bis 5, wobei die Zertifikate der Kommunikationspartner in einer Positivliste (28) in Abhängigkeit von der Häufigkeit ihrer Nutzung angeordnet sind.

7. Verfahren nach Anspruch 6, wobei die Anordnung der Zertifikate in der Positivliste (28) dynamisch während der Gültigkeitsdauer der Positivliste (28) angepasst wird.

8. Verfahren nach einem der Ansprüche 1 bis 7, wobei der Zielrahmen als Parameter in einer Positivliste (28) durch eine Textzeichenkette und/oder durch eine IP-Adresse und/oder durch einen Server-Namen und/oder durch eine Objektkennung angegeben wird.

9. Verfahren nach einem der Ansprüche 1 bis 8, wobei eine bereits erzeugte zielrahmenspezifische Positivliste ausgewählt wird und an das Gerät (40) übermittelt wird, wenn ein Zielrahmen identifiziert wird, für den bereits eine zielrahmenspezifische Positivliste erzeugt wurde.

10. Listen-Verwaltungsvorrichtung (20, 21, 22) zur Bereitstellung einer Vielzahl von Positivlisten (28) für ein Gerät (40) in einer Kommunikationsumgebung umfassend eine Eingabeeinheit (25), die derart ausgebildet ist, Zielrahmen für das Gerät (40) durch eine Eingabe zu identifizieren, eine Konfigurationseinheit (27), die derart ausgebildet ist, für jede Teilmenge an erlaubten Kommunikationspartner aus einer Gesamtheit an möglichen Kommunikationspartnern für den jeweiligen identifizierten Zielrahmen zu ermitteln und daraus eine Positivliste (28), die jeweils ein Zertifikat für jeden ermittelten erlaubten Kommunikationspartner umfasst, zu erzeugen, und eine Ausgabeeinheit (26), die die zielrahmenspezifischen Positivlisten (28) an das Gerät (40) übermittelt, **dadurch gekennzeichnet, dass** für unterschiedliche Zielrahmen unterschiedliche Positivlisten erzeugt werden, die jeweils für eine bestimmte Teilmenge der möglichen Kommunikationspartner in dem Gerät (40) verwendet werden.

11. Listen-Verwaltungsvorrichtung nach Anspruch 10, wobei die Konfigurationseinheit (27) derart ausgebildet ist, eine Aktualisierung der Positivlisten (28) durchzuführen.

12. Listen-Verwaltungsvorrichtung nach Anspruch 10 oder 11, wobei die Ausgabeeinheit (26) die Positivliste (28) signiert und über eine lokale und/oder gesicherte Verbindung an das Gerät (40) übermittelt.

13. Listen-Verwaltungsvorrichtung nach Anspruch 11 oder 12, wobei die Konfigurationseinheit (27) einen Filter umfasst, der die Zertifikate in einer Reihenfolge entsprechend der Häufigkeit ihrer Nutzung in der Positivliste anordnet.

14. Listen-Verwaltungsvorrichtung nach Anspruch 10, wobei die Konfigurationseinheit (27) derart ausgebildet ist eine Vielzahl von Zielrahmenspezifischen Positivlisten (28.l, .., 28.k) zu speichern und beim Identifizieren eines bekannten Zielrahmens die dem bekannten Zielrahmen entsprechende Positivliste (28) auszuwählen und über die Ausgabeeinheit (26) an das Gerät (40) zu übermitteln.

15. Gerät (40, 41) zur Zertifikat-basierte Authentifizierung von Kommunikationspartnern in einer Kommunikationsumgebung (30) umfassend
eine Speichereinheit (42), die derart ausgebildet ist, eine Positivliste (28) mit erlaubten Zertifikaten abzuspeichern, eine Authentisierungseinheit (43), die derart ausgebildet ist, ein Zertifikat eines vermeintlichen Kommunikationspartners gegenüber den erlaubten Zertifikaten in der Positivliste (28) zu überprüfen, wobei eine Kommunikation nur dann erlaubt wird, wenn das Zertifikat des vermeintlichen Kommunikationspartners mit einem Zertifikat in der Positivliste (28) übereinstimmt, **dadurch gekennzeichnet, dass** das Gerät derart ausgebildet ist, für unterschiedliche Zielrahmen unterschiedliche Positivlisten zu speichern, die jeweils für eine bestimmte Teilmenge von möglichen Kommunikationspartner verwendet werden.

16. Gerät (40, 41) nach Anspruch 15, wobei ein Gerät (40, 41) eine oder mehrere Zielrahmenspezifische Positivlisten (28.1, ..., 28.n) umfasst.

17. Gerät (40, 41) nach einem der Ansprüche 15 oder 16, wobei die Speichereinheit (42) einen Filter umfasst, der die erlaubten Zertifikate in einer Reihenfolge entsprechend der Häufigkeit ihrer Nutzung in der Positivliste (28) anordnet.

18. Computerprogrammprodukt mit Programmbefehlen, welche auf einem Computer gespeichert und geladen, dazu ausgelegt sind, ein Verfahren gemäß Ansprüchen 1-9 durchzuführen.

## Claims

1. Method for a certificate-based authentication of communication partners in a device (40), comprising the method steps:
- identifying (11) a target frame for the device by an input to a list management apparatus (20),
- ascertaining (12) all permitted communication partners for the identified target frame (33) from a total quantity of possible communication partners in the list management apparatus (20),
- producing (13) a positive list (28) specific to the target frame (33), which in each case comprises a certificate for each ascertained permitted communication partner in the list management apparatus (20),
- storing the positive list (28) on the device (40),
- checking a certificate received from a purported communication partner in the device (40) against the certificates in the positive list (28), with a communication between the device (40) and the purported communication partner being permitted only if the certificate of the purported communication partner matches a certificate in the positive list (28),
- **characterized in that** different positive lists which are each used for a particular subset of the possible communication partners are stored in the device (40) for different target frames.

2. Method according to Claim 1, wherein the target frame of the device (40) is identified by a specification of a device type and/or of a purpose of use of the device (40) and/or of a permitted geographic field of use of the device (40).

3. Method according to Claim 1, wherein side conditions relating to the validity of a certificate are entered in the positive list.

4. Method according to Claim 3, wherein the presence of a valid attribute certificate and/or the presence of predetermined parameters of an attribute certificate are entered as side condition for the certificate in the positive list.

5. Method according to either of Claims 1 and 4, wherein, during or after an updating of the positive list (28) of the device (40), all communication links which have been set up from the device (40) to a communication partner with a certificate no longer permitted are ended and newly set up or session negotiation procedures are initiated.

6. Method according to one of Claims 1 to 5, wherein the certificates of the communication partners are arranged in a positive list (28) in dependence on the frequency of their utilization.

7. Method according to Claim 6, wherein the arrangement of the certificates in the positive list (28) is adapted dynamically during the period of validity of the positive list (28) .

8. Method according to one of Claims 1 to 7, wherein the target frame is specified as a parameter in a positive list (28) by a string of text characters and/or by an IP address and/or by a server name and/or by an object identifier.

9. Method according to one of Claims 1 to 8, wherein a target-frame-specific positive list already produced is selected and conveyed to the device (40) when a target frame is identified for which a target-frame-specific positive list has already been produced.

10. List management apparatus (20, 21, 22) for providing a multiplicity of positive lists (28) for a device (40) in a communication environment, comprising
an input unit (25) which is designed to identify target frames for the device (40) by an input,
a configuration unit (27) which is designed to ascertain for each subset of permitted communication partners from a total quantity of possible communication partners for the respective identified target frame and to produce therefrom a positive list (28) which in each case comprises a certificate for each ascertained permitted communication partner, and
an output unit (26) which conveys the target-frame-specific positive lists (28) to the device (40),
**characterized in that** different positive lists which are each used for a particular subset of the possible communication partners in the device (40) are generated for different target frames.

11. List management apparatus according to Claim 10, wherein the configuration unit (27) is designed to perform updating of the positive list (28).

12. List management apparatus according to Claim 10 or 11, wherein the output unit (26) conveys the positive list (28), signed and via a local and/or secured link, to the device (40).

13. List management apparatus according to Claim 11 or 12, wherein the configuration unit (27) comprises a filter which arranges the certificates in the positive list in an order corresponding to the frequency of their utilization.

14. List management apparatus according to Claim 10, wherein the configuration unit (27) is designed to store a multiplicity of target-frame-specific positive lists (28.1, ..., 28.k) and, in identifying a known target frame, to select the positive list (28) corresponding to the known target frame and convey it by the output unit (26) to the device (40).

15. Device (40, 41) for the certificate-based authentication of communication partners in a communication environment (30) comprising
a storage unit (42) which is designed to store a positive list (28) with permitted certificates,
an authentication unit (43) which is designed to check a certificate of a purported communication partner against the permitted certificates in the positive list (28), with a communication being permitted only if the certificate of the purported communication partner matches a certificate in the positive list (28),
**characterized in that** the device is designed to store different positive lists, which are each used for a particular subset of possible communication partners, for different target frames.

16. Device (40, 41) according to Claim 15, wherein a device (40, 41) comprises one or more target-frame-specific positive lists (28.1, ..., 28.n).

17. Device (40, 41) according to either of Claims 15 and 16, wherein the storage unit (42) comprises a filter which arranges the permitted certificates in the positive list (28) in an order corresponding to the frequency of their utilization.

18. Computer program product with program commands which, when loaded and stored on a computer, are designed to carry out a method according to Claims 1-9.

## Revendications

1. Procédé pour une authentification par certificat de partenaires de communication dans un appareil (40), comportant les étapes suivantes :
- identification (11) d'un cadre cible pour l'appareil par une saisie au niveau d'un dispositif de gestion de listes (20) ;
- détermination (12) de tous les partenaires de communication autorisés pour le cadre cible identifié (33) à partir d'un ensemble de partenaires de communication possibles dans le dispositif de gestion de listes (20) ;
- génération (13) d'une liste positive (28) spécifique pour le cadre cible (33), laquelle comprend, dans le dispositif de gestion de listes (20), respectivement un certificat pour chaque partenaire de communication autorisé déterminé ;
- sauvegarde de la liste positive (28) sur l'appareil (40) ;
- vérification d'un certificat reçu d'un présumé partenaire de communication dans l'appareil (40) par rapport aux certificats de la liste positive (28), une communication entre l'appareil (40) et le présumé partenaires de communication n'étant autorisée que si le certificat du présumé partenaire de communication coïncide avec un certificat de la liste positive (28), **caractérisé en ce que** sont sauvegardées, dans l'appareil (40), pour différents cadres cibles, différentes listes positives qui sont respectivement utilisées pour un sous-ensemble déterminé des partenaires de communication possibles.

2. Procédé selon la revendication 1, le cadre cible de l'appareil (40) étant **caractérisé par** une mention d'un type d'appareil et/ou d'un usage de l'appareil (40) et/ou d'une zone d'utilisation géographique autorisée de l'appareil (40).

3. Procédé selon la revendication 1, des conditions accessoires relatives à la validité d'un certificat étant inscrites dans la liste positive.

4. Procédé selon la revendication 3, en tant que condition accessoire étant inscrites dans la liste positive la présence d'un certificat d'attribut valable et/ou la présence de paramètres prédéterminés d'un certificat d'attribut du certificat.

5. Procédé selon l'une des revendications 1 ou 4, lors d'une ou après une actualisation de la liste positive (28) de l'appareil (40), toutes les liaisons de communication établies par l'appareil (40) vers un partenaire de communication avec un certificat qui n'est plus autorisé étant terminées et de nouveau établies ou des procédures de négociation de session étant initialisées.

6. Procédé selon l'une des revendications 1 à 5, les certificats des partenaires de communication étant ordonnés dans une liste positive (28) en fonction de la fréquence de leur utilisation.

7. Procédé selon la revendication 6, l'ordre des certificats dans la liste positive (28) étant adapté dynamiquement pendant la durée de validité de la liste positive (28).

8. Procédé selon l'une des revendications 1 à 7, le cadre cible étant indiqué en tant que paramètre dans une liste positive (28) par une chaîne de caractères de texte et/ou par une adresse IP et/ou par un nom de serveur et/ou par un identifiant d'objet.

9. Procédé selon l'une des revendications 1 à 8, une liste positive spécifique à un cadre cible et déjà générée étant sélectionnée et transmise à l'appareil (40) lorsqu'est identifié un cadre cible pour lequel a déjà été générée une liste positive spécifique à un cadre cible.

10. Dispositif de gestion de listes (20, 21, 22) pour mise à disposition d'une pluralité de listes positives (28) pour un appareil (40) dans un environnement de communication, comprenant :
une unité de saisie (25) qui est conçue de manière à identifier des cadres cibles pour l'appareil (40) par une saisie ;
une unité de configuration (27) qui est conçue de manière à déterminer des cadres cibles pour chaque sous-ensemble de partenaires de communication autorisés à partir d'un ensemble de partenaires de communication possibles pour le cadre cible identifié respectif et à générer sur cette base une liste positive (28) qui comprend respectivement un certificat pour chaque partenaire de communication autorisé déterminé et
une unité de sortie (26) qui transmet à l'appareil (40) les listes positives (28) spécifiques à des cadres cibles,
**caractérisé en ce que** sont générées, pour différents cadres cibles, différentes listes positives qui sont utilisées respectivement pour un sous-ensemble déterminé des partenaires de communication possibles dans l'appareil (40).

11. Dispositif de gestion de listes selon la revendication 10, l'unité de configuration (27) étant conçue de manière à effectuer une actualisation de la liste positive (28).

12. Dispositif de gestion de listes selon la revendication 10 ou 11, l'unité de sortie (26) signant la liste positive (28) et la transmettant à l'appareil (40) via une liaison locale et/ou sécurisée.

13. Dispositif de gestion de listes selon la revendication 11 ou 12, l'unité de configuration (27) comprenant un filtre qui ordonne les certificats dans un ordre selon la fréquence de leur utilisation dans la liste positive.

14. Dispositif de gestion de listes selon la revendication 10, l'unité de configuration (27) étant conçue pour sauvegarder une pluralité de listes positives (28.1, ... , 28.k) spécifiques à des cadres cibles et sélectionner, à l'identification d'un cadre cible connu, la liste positive (28) correspondant au cadre cible connu et pour la transmettre à l'appareil (40) via l'unité de sortie (26).

15. Appareil (40, 41) pour l'authentification par certificat de partenaires de communication dans un environnement de communication (30), comprenant une unité de mémoire (42) qui est conçue de manière à sauvegarder une liste positive (28) avec des certificats autorisés, une unité d'authentification (43) qui est conçue pour vérifier un certificat d'un présumé partenaire de communication par rapport aux certificats autorisés de la liste positive (28), une communication n'étant autorisée que si le certificat du présumé partenaire de communication coïncide avec un certificat de la liste positive (28), **caractérisé en ce que** l'appareil est conçu de manière à sauvegarder, pour différents cadres cibles, différentes listes positives qui sont respectivement utilisées pour un sous-ensemble déterminé des partenaires de communication possibles.

16. Appareil (40, 41) selon la revendication 15, un appareil (40, 41) comprenant une ou plusieurs listes positive (28.1, ... , 28.n) spécifiques à des cadres cibles.

17. Appareil (40, 41) selon l'une des revendications 15 ou 16, l'unité de mémoire (42) comprenant un filtre qui ordonne les certificats dans un ordre selon la fréquence de leur utilisation dans la liste positive (28) .

18. Produit de programme informatique avec des commandes de programme sauvegardées et chargées sur un ordinateur, conçues pour exécuter un procédé selon les revendications 1-9.
